# EUROPEAN PATENT APPLICATION

(11) **EP 3 379 313 A1**
(43) Date of publication of application: **26.09.2018**
(21) Application number: 18162081.6
(22) Date of filing: 15.03.2018
(51) Int. Cl.: G02B 6/44, H02G 15/013

(54) **DETACHABLE CONNECTION APPARATUS FOR SEALING CABLE AND COMMUNICATIONS TERMINAL BOX**

(30) Priority: 24.03.2017 WO PCT/CN2017/078108
(71) Applicant: Huawei Technologies Co., Ltd., Longgang District Shenzhen Guangdong 518129 (CN)
(72) Inventor: Guo, Mingsong, Shenzhen, Guangdong 518129 (CN); Pei, Guohua, Shenzhen, Guangdong 518129 (CN); Yang, Bo, Shenzhen, Guangdong 518129 (CN)
(74) Representative: Epping - Hermann - Fischer

(57) **Abstract**

A detachable connection apparatus for sealing a cable and a communications terminal box are provided. The detachable connection apparatus includes a housing, a first bolt, a clamping member, and a first sealing member. The housing includes a first end and a second end, the housing extends from the first end to the second end along an axial direction, and a first thread is provided on an inner wall of a port of the first end. The clamping member is disposed at a position that is on an inner wall of the first end and that is close to the first thread along an axial direction. The first bolt is of a hollow structure. The first bolt that is sleeved on the cable is configured to: when the cable is inserted into the housing, enter the housing from the first end, and move along an axial direction of the housing, so that guided by an inner peripheral wall of the clamping member, the first sealing member moves towards the second end, and a part that is of the first sealing member and that stretches into the clamping member is deformed, so that the first bolt is locked with the first thread by using the first sealing member, and the cable is sealed and fastened on an inner wall of the housing. The inserted cable can be fastened and sealed by using the foregoing structure, repeated opening can be implemented, and installation can be simplified.

## Description

### TECHNICAL FIELD

This application relates to the field of mechanical technologies, and in particular, to a detachable connection apparatus for sealing a cable and a communications terminal box.

### BACKGROUND

In a process of routing a drop cable of an optical cable, after the optical cable is inserted into a splitting and splicing closure, the optical cable needs to be sealed and fastened. The optical cable is usually sealed in a heat shrink tubing sealing manner. However, an optical cable interface that is sealed in the heat shrink sealing manner cannot be repeatedly opened, and it is inconvenient to perform operations such as maintenance and replacement. In addition, a dedicated tool such as a heat gun needs to be used, this type of dedicated tool requires a power supply, and it is usually difficult to obtain electricity during field construction. Therefore, it can be learned that this sealing manner has limited application scenarios.

To avoid depending on the dedicated tool, currently, a mechanical sealing manner is mainly used to seal the optical cable. However, in the mechanical sealing manner, relatively many sealing parts need to be installed, and there is a strict requirement on a sequence of installing these sealing parts. Operation steps are complex, and it is likely to start all over again especially in a scenario in which a plurality of optical cables are inserted into one optical cable hole. Furthermore, when a cable is subsequently added, an optical cable for which a service has been previously enabled is affected, and this is unfavorable to single-cable management.

### SUMMARY

This application provides a detachable connection apparatus for sealing a cable and a communications terminal box, so as to resolve a prior-art problem of relatively low drop cable installation efficiency.

A first aspect of this application provides a detachable connection apparatus for sealing a cable. The detachable connection apparatus may be used together with a communications terminal box, and may be connected to the communications terminal box. The communications terminal box may include a splitting and splicing closure, a cable-joint protection box, another fiber access terminal, a cable access terminal, and the like. This is not specifically limited in this application. In this application, the detachable connection apparatus includes a housing, a first bolt, a clamping member, and a first sealing member.

The housing includes a first end and a second end, the housing extends from the first end to the second end along an axial direction, a first thread is provided on an inner wall of a port of the first end, and the first thread is configured to thread with the first bolt.

The clamping member is disposed at a position that is on an inner wall of the first end and that is close to the first thread along an axial direction.

The first bolt is of a hollow structure.

The first bolt that is sleeved on the cable is configured to: when the cable is inserted into the housing, enter the housing from the first end, and move along an axial direction of the housing, so that guided by an inner peripheral wall of the clamping member, the first sealing member moves towards the second end, and a part that is of the first sealing member and that stretches into the clamping member is deformed, so that the first bolt is locked with the first thread by using the first sealing member, and the cable is sealed and fastened on an inner wall of the housing.

Compared with the prior art, the solution provided in this application is as follows: With this structure, when the cable is inserted into the housing, the first bolt moves along the axial direction of the housing, so that guided by the inner peripheral wall of the clamping member, the first sealing member moves towards the second end, and the part that is of the first sealing member and that stretches into the clamping member is deformed, so that the first bolt is locked with the first thread by using the first sealing member, and the cable is finally sealed and fastened on the inner wall of the housing. The inserted cable can be fastened and sealed by using this structure. In addition, this structure can be repeatedly opened, is easy to detach, requires no power supply for driving, and can be operated by using only a simple screwdriver, and its installation scenario is not limited. The communications terminal box does not need to be repeatedly flipped when the cable is connected. Therefore, in comparison with an existing mechanism, installation can be simplified and installation efficiency can be improved.

In some possible designs, the clamping member is disposed on the inner wall of the first end, and extends to the second end. Optionally, the housing is detachably connected to the clamping member. In this way, detachment is easy to perform, and an appropriate clamping member may be selected according to a shape of an axial cross section of the cable. A plurality of clamping members may be provided in this application, and are used together with the housing. In this application, the clamping member includes a first end and a second end. An aperture of the first end of the clamping member is not equal to an aperture of the second end of the clamping member. The first end of the clamping member faces the second end of the housing, and the second end faces the first end of the housing. The first end of the clamping member can accommodate at least the cable for passing. The clamping member may be made of an elastic material. In a process of inserting the cable and locking the first bolt, the clamping member may be deformed, to strengthen sealing and fastening of the cable.

Optionally, a shape of an inner wall of the clamping member in this application is changeable. For example, the shape may be a curved surface of any shape, or may be a conical curved surface or a cuboid curved surface, and may be specifically set according to the shape of the axial cross section of the cable. For example, the clamping member may include a curved surface. Curvature of the curved surface progressively increases with an extension direction of the curved surface. The extension direction of the curved surface is a direction from the first end to the second end along the axial direction. Generally, the clamping member may use a conical curved surface, and a conical cavity that is inwardly protruded may be directly provided on the inner wall of the housing, to form a clamping member. Alternatively, the clamping member may be a separate component, and may be installed on the inner wall of the housing. A clamping trough may be provided on the inner wall of the housing, and used to fasten the clamping member.

For example, the curved surface of the clamping member may be a wedge conical curved surface or a sectoral curved surface. The wedge conical curved surface may include a first end and a second end. An aperture of the first end is not equal to an aperture of the second end. The first end faces the second end of the housing, and the second end faces the first end of the housing. In addition, the first end can accommodate at least the cable for passing. A size of the aperture of the first end may be flexibly set. It can be learned that the wedge conical curved surface or the sectoral curved surface can better adapt to insertion of the cable, can provide a relatively good guide in mechanically squeezing the first sealing member onto the curved surface, and certainly can bring better sealing performance.

In some possible designs, the cable includes a strength member structure. For example, to further fasten an optical fiber in an optical cable or a power line in a power cable, the detachable connection apparatus may further include a first screw and a first nut.

The first nut is configured to: when the cable is inserted into the housing, on the second end, thread with the first screw that penetrates through the strength member structure, where the strength member structure is located between the first nut and the first screw.

Optionally, a position for threading a nylon binding strap may be further reserved on the second end of the housing. After the strength member structure of the cable is fastened, the binding strap may be further used to bind and fasten the cable.

In some possible designs, in consideration that a cross section of the cable may have different shapes, a matched structure of the first sealing member may be correspondingly designed according to a shape of the cross section of the cable, and a shape of an inner wall of the first sealing member may be set to match the shape of the cross section of the cable. In this way, a scenario in which cables of various shapes are sealed and fastened can be adapted.

In some possible designs, for an installation scenario of a plurality of cables, the first sealing member may be set as a porous structure, and each hole can accommodate a cable for passing. A quantity of holes disposed on the first sealing member is not limited in this application, provided that the hole can match a diameter of a to-be-installed cable. Apertures of holes on the first sealing member may be the same or different, so as to adapt to cables of different diameters. This may be specifically set according to an actual requirement, and is not limited in this application.

In some possible designs, the first sealing member in this application may alternatively be of a detachable structure. For example, the cable may be placed after the first sealing member is opened, and the cable does not need to pass through the first sealing member. Therefore, it can be learned that this detachable structure is applicable to sealing and fastening of a straight-through cable. In this way, installation efficiency can be effectively improved.

In some possible designs, the detachable connection apparatus further includes a second sealing member that matches an outer wall of the housing. The second sealing member is configured to be mutually plug-connected to the detachable connection apparatus when the detachable connection apparatus in which the cable is installed is connected to the communications terminal box, so that the second sealing member is connected to an inner wall of the communications terminal box in a sealed manner by using an interference fit. Sealing and fastening of the detachable connection apparatus and the communications terminal box can be further strengthened by using the second sealing member.

In some possible designs, an elastic buckle is disposed at a position that is on an outer wall of the second end of the housing and that is close to the second sealing member. The elastic buckle is configured to be inversely buckled on the inner wall of the communications terminal box when the detachable connection apparatus in which the cable is installed is connected to the communications terminal box, so that the second sealing member is connected to the inner wall of the communications terminal box in a sealed manner. It can be learned that by inversely buckling the elastic buckle, fastening between the detachable connection apparatus and the housing can be further strengthened, and mechanical detaching is easy to perform.

In some possible designs, a fastening structure is disposed on one end of the first bolt, and when the cable penetrates through the first bolt, the fastening structure abuts against the cable, so that the fastening structure suppresses relative movement between the cable and the detachable connection apparatus. With the fastening structure, on one hand, an increased friction factor makes it easier for a user to tighten the cable and the detachable connection apparatus, and on the other hand, the cable may be further prevented from being loose.

A second aspect of this application further provides a communications terminal box. The communications terminal box includes a cable leading-in hole and the detachable connection apparatus in any one of the first aspect or the possible designs of the first aspect.

A third aspect of this application further provides a housing. The housing includes a first end and a second end, the housing extends from the first end to the second end along an axial direction, a first thread is provided on an inner wall of a port of the first end, and a clamping member is disposed at a position that is on an inner wall of the first end and that is close to the first thread along an axial direction.

In some possible designs, the clamping member is disposed on the inner wall of the first end, and extends to the second end.

In some possible designs, the clamping member includes a curved surface. Curvature of the curved surface progressively increases with an extension direction of the curved surface. The extension direction of the curved surface is a direction from the first end to the second end along the axial direction. It is set that the curvature of the curved surface progressively increases with the extension direction of the curved surface, so as to provide a guide for a component that is inserted into the housing , and to mechanically squeeze the component that is inserted into the housing1. For example, when a cable is inserted into the housing, a sealing member needs to be used to fasten and seal the cable. Then, guided by the curved surface, in a process of entering the curved surface, the sealing member can be mechanically squeezed, so that the sealing member implements a better sealing function.

Optionally, the curved surface is a wedge conical curved surface or a sectoral curved surface. For example, when the cable inserted into the housing is sealed, the wedge conical curved surface or the sectoral curved surface can better adapt to insertion of the cable, can provide a relatively good guide in mechanically squeezing the sealing member onto the curved surface, and certainly can bring better sealing performance.

Compared with the prior art, the solution provided in this application is as follows: The detachable connection apparatus includes the housing, the first bolt, and the first sealing member, and the clamping member and the first thread are disposed on the inner wall of the first end of the housing. With this structure, when the cable is inserted into the housing, the first bolt moves along the axial direction of the housing, so that the first sealing member moves along the clamping member towards the second end, and the part that is of the first sealing member and that stretches into the clamping member is deformed, so that the first bolt is locked with the first thread by using the first sealing member, and the cable is finally sealed and fastened on the inner wall of the housing. The inserted cable can be fastened and sealed by using this structure. In addition, this structure can be repeatedly opened, and is easy to detach. In comparison with an existing mechanism, installation can be simplified and installation efficiency can be improved.

### BRIEF DESCRIPTION OF DRAWINGS

FIG. 1 is a schematic structural diagram of a detachable connection apparatus according to an embodiment of the present invention;
FIG 2 is another schematic structural diagram of a detachable connection apparatus according to an embodiment of the present invention;
FIG. 3 is another schematic structural diagram of a detachable connection apparatus according to an embodiment of the present invention;
FIG 4 is another schematic structural diagram of a detachable connection apparatus according to an embodiment of the present invention;
FIG 5 is a schematic structural diagram in which a detachable connection apparatus and a communications terminal box are sealed and fastened according to an embodiment of the present invention;
FIG 6 is another schematic structural diagram of a detachable connection apparatus according to an embodiment of the present invention;
FIG. 7 is a schematic structural diagram of a flat drop cable according to an embodiment of the present invention;
FIG. 8 is a schematic structural diagram of a first sealing member according to an embodiment of the present invention;
FIG. 9 is a schematic structural diagram in which a cable and a detachable connection apparatus are sealed and fastened according to an embodiment of the present invention; and
FIG. 10 is a schematic structural diagram of a housing according to an embodiment of the present invention.

### DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. In addition, the terms "include", "have", and any other variants thereof are intended to cover non-exclusive inclusion. For example, a product or a device that includes a series of steps or modules is not necessarily limited to these structures that are expressly listed, and may include another structure that is not expressly listed or inherent to the product or device. An example of a structure in this application is merely an example for description, and there may be another alternative structure during implementation in actual application. For example, a plurality of components may be combined or integrated into another structure, or some structure features may be ignored or not performed. In addition, some or all structures of displayed or discussed mutual couplings or direct couplings may be selected according to an actual requirement to implement the objective of the solutions in the embodiments of the present invention.

Embodiments of the present invention provide a detachable connection apparatus for sealing a cable and a communications terminal box, and are applied to the field of mechanical technologies, to resolve a problem of relatively low drop cable installation efficiency in an existing mechanism in the prior art. The communications terminal box in this application may alternatively be a splitting and splicing closure, a cable-joint protection box, another fiber access terminal, or a cable access terminal. A specific name is not limited in this application.

Driving of a heat shrinking sealing manner is limited to a power supply, a mechanical sealing operation has a complex step, and a splitting and splicing closure needs to be repeatedly flipped when an optical cable is introduced. Therefore, to resolve the foregoing technical problems, the following technical solutions are mainly provided in the embodiments of the present invention:
An optical cable is simultaneously fastened and sealed on one component. After the optical cable is sealed and fastened by using a fiber plug, the fiber plug may be directly inserted into a corresponding hole on a splitting and splicing closure, then the optical cable and a housing of the splitting and splicing closure are sealed by using a sealing ring, and an elastic buckle may be further disposed on an outer wall of the fiber plug to connect the fiber plug and the housing of the splitting and splicing closure in a fastened manner, so as to ensure that the entire component is rapidly installed, fastened, and sealed. The fiber plug used in this application may improve optical fiber connection reliability, and can also effectively resist vibration and loosening.

It should be noted that the fiber plug in this application may alternatively be a power cable plug or a similar structure. This application may be further applied to outdoor power cable sealing and plug fastening, and it is only necessary to replace the optical cable with a corresponding power cable. Certainly, this application may also be applied to any other scenario in which a cable needs to be sealed. Correspondingly, the splitting and splicing closure may also be replaced with a cable-joint protection box. A specific application scenario is not limited in this application.

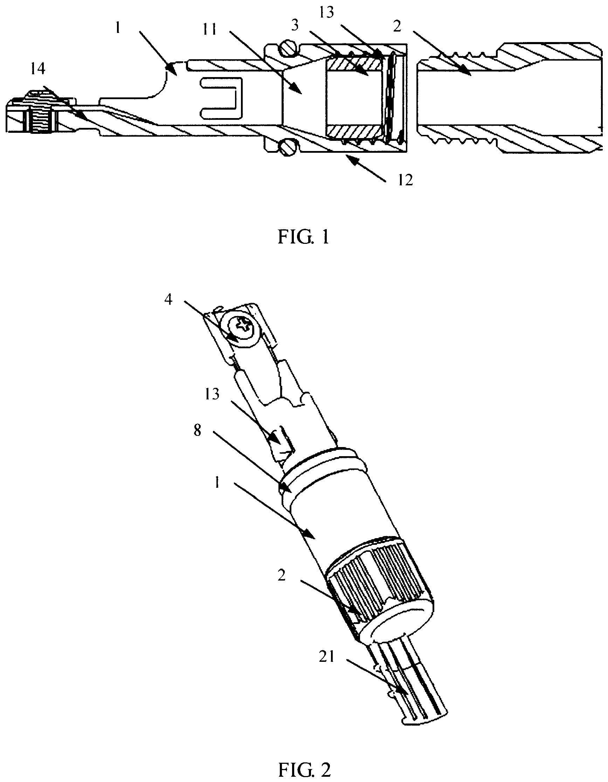

Referring to FIG 1, this application provides a detachable connection apparatus for sealing a cable. The detachable connection apparatus may be used together with a communications terminal box, and may be connected to the communications terminal box. The detachable connection apparatus includes a housing 1, a first bolt 2, a first sealing member 3, and a clamping member 11.

The housing 1 includes a first end 13 and a second end 14. The housing 1 extends from the first end 13 to the second end 14 along an axial direction. A first thread 12 is provided on an inner wall of a port of the first end 13. The first thread 12 is configured to thread with the first bolt 2.

The clamping member 11 is disposed at a position that is on an inner wall of the first end 13 and that is close to the first thread 12 along an axial direction.

The first bolt 2 is of a hollow structure.

The first bolt 2 that is sleeved on the cable is configured to: when the cable is inserted into the housing 1, enter the housing 1 from the first end 13, and move along an axial direction of the housing 1, so that guided by an inner peripheral wall of the clamping member 11, the first sealing member 3 moves towards the second end 14, and a part that is of the first sealing member 3 and that stretches into the clamping member 11 is deformed, so that the first bolt 2 is locked with the first thread 12 by using the first sealing member 3, and the cable is sealed and fastened on an inner wall of the housing 1.

Compared with the prior art, the solution provided in this application is as follows: With the foregoing structure, when the cable is inserted into the housing 1, the first bolt 2 moves along the axial direction of the housing 1, so that the first sealing member 3 moves along the clamping member 11 towards the second end 13, and the part that is of the first sealing member 3 and that stretches into the clamping member 11 is deformed, so that the first bolt 2 is locked with the first thread 12 by using the first sealing member 3, and the cable is finally sealed and fastened on the inner wall of the housing 1. The inserted cable can be fastened and sealed by using this structure. In addition, this structure can be repeatedly opened, is easy to detach, requires no power supply for driving, and can be operated by using only a simple screwdriver, and its installation scenario is not limited. The communications terminal box does not need to be repeatedly flipped when the cable is connected. Therefore, in comparison with an existing mechanism, installation can be simplified and installation efficiency can be improved.

Optionally, in some embodiments of the present invention, the clamping member 11 is disposed on the inner wall of the first end 13, and extends to the second end 14 of the housing 1, and the housing 1 is detachably connected to the clamping member 11. In this way, detachment is easy to perform, and an appropriate clamping member may be selected according to a shape of an axial cross section of the cable. A plurality of clamping members 11 may be disposed in this application, and are used together with the housing 1.

In some implementations, the clamping member 11 includes a first end and a second end. An aperture of the first end of the clamping member 11 is not equal to an aperture of the second end of the clamping member 11. The first end of the clamping member 11 faces the second end of the housing 1. The second end faces the first end of the housing 1. The first end of the clamping member 11 can accommodate at least the cable for passing. The clamping member 11 may be made of an elastic material. In a process of inserting the cable and locking the first bolt 2, the clamping member 11 may be deformed, to strengthen sealing and fastening of the cable.

In some implementations, a shape of an inner wall of the clamping member 11 in this application is changeable. For example, the shape may be a curved surface of any shape, or may be a conical curved surface or a cuboid curved surface, and may be specifically set according to the shape of the axial cross section of the cable. For example, the clamping member 11 may include a curved surface. The curved surface intersects with the inner wall of the first end 13. Curvature of the curved surface progressively increases with an extension direction of the curved surface. The extension direction of the curved surface is a direction from the first end 13 to the second end 14 along the axial direction. It is set that the curvature of the curved surface progressively increases with the extension direction of the curved surface, so that in a process of entering the curved surface, the first sealing member can be effectively mechanically squeezed, and the first sealing member implements a better sealing function. Generally, the clamping member 11 may use a conical curved surface, and a conical cavity that is inwardly protruded may be directly provided on the inner wall of the housing 1, to form a clamping member. Alternatively, the clamping member 11 may be a separate component, and may be installed on the inner wall of the housing. A clamping trough may be provided on the inner wall of the housing, and used to fasten the clamping member 11.

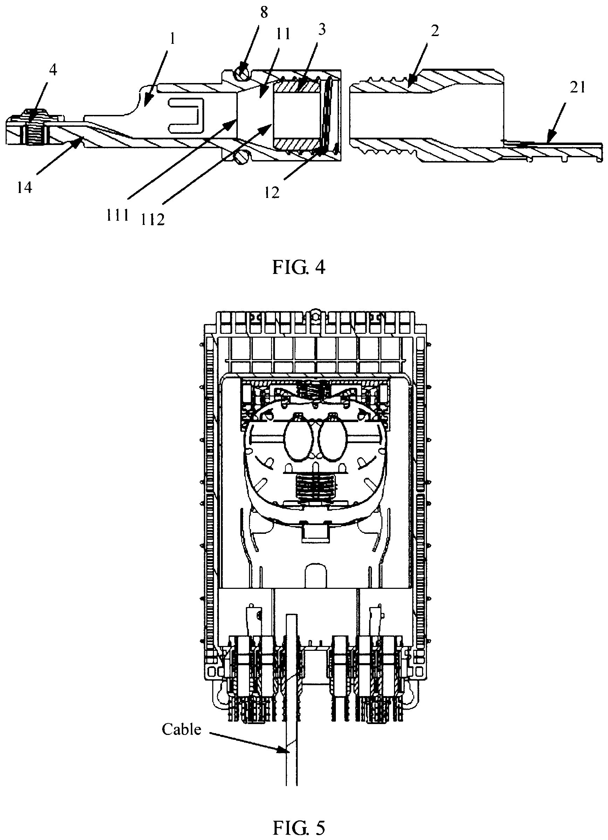

The curved surface of the clamping member 11 may be a wedge conical curved surface or a sectoral curved surface, and the following uses the wedge conical curved surface 11 as an example. As shown in a side cutaway diagram shown in FIG. 4, the wedge conical curved surface 11 includes a first end 111 and a second end 112. An aperture of the first end 111 is not equal to an aperture of the second end 112. The first end 111 faces the second end 14 of the housing 1, and the second end 112 faces the first end 13 of the housing 1. In addition, the first end 111 can accommodate at least the cable for passing. A size of the aperture of the first end 111 may be flexibly set. It can be learned that the wedge conical curved surface or the sectoral curved surface can better adapt to insertion of the cable, can provide a relatively good guide in mechanically squeezing the first sealing member onto the curved surface, and certainly can bring better sealing performance.

In an implementation, it may be assumed that the aperture of the second end 112 is greater than the aperture of the first end 111. Specifically, a difference between the aperture of the first end and the aperture of the second end may be flexibly set according to parameters such as a diameter of the inner wall of the housing 1, and the shape and a size of the axial cross section of the cable. A size of the aperture of the first end 111, a size of the aperture of the second end 112, the difference between the aperture of the first end and the aperture of the second end, and an axial length of the entire wedge conical curved surface 11 are not limited in this application. When the cable is inserted, the first bolt 2 stretches into an inner wall of the second end 14 of the housing 1 from the second end 112 of the wedge conical curved surface 11, and moves from the first end of the wedge conical curved surface 11 to the second end 112. In this way, radial fastening force from the second end 112 of the wedge conical curved surface 11 acts on the first sealing member 3 that is sleeved on the first bolt 2. Therefore, a diameter of the first sealing member 3 can be restricted, and the diameter continuously decreases. Finally the first sealing member can be tightly fastened to the penetrating cable, and therefore the cable is sealed. The sealed detachable connection apparatus is then connected to the communications terminal box. For a schematic structural diagram obtained after the connection, refer to FIG. 5.

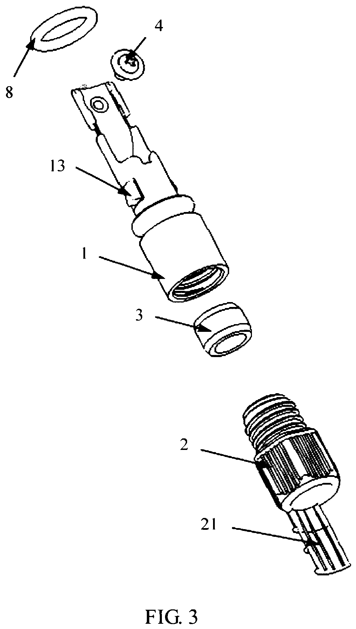

Optionally, in some embodiments of the present invention, the cable in this application may include a strength member structure. The strength member structure is used to strengthen strength of the cable, and prevent an optical fiber in an optical cable or an electrical wire in a power cable from being broken. To further fasten the cable, the detachable connection apparatus may further include a first screw 4 and a first nut 5. For a specific structure, refer to FIG. 3 and FIG. 4. In this application, the first nut 5 may be configured to: when the cable is inserted into the housing 1, on the second end 14, thread with the first screw 4 that penetrates through the strength member structure. The strength member structure is located between the first nut 5 and the first screw 4. For example, after the cable enters the housing 1, the strength member structure may be placed on the first nut 5 on the second end 14 of the housing 1, and then the first screw 4 is used to tightly press the strength member structure, so as to fasten the strength member structure.

Optionally, a position for threading a nylon binding strap may be further reserved on the second end 14 of the housing 1. After the strength member structure of the cable is fastened, the binding strap may be further used to bind and fasten the cable.

The cable is separately fastened on the first end 13 and the second end 14 of the housing 1, and the cable is sealed on the first end of the housing 1. In this way, the dual fastening and sealing manner can effectively avoid a problem that the cable is loose or sealing performance is relatively poor.

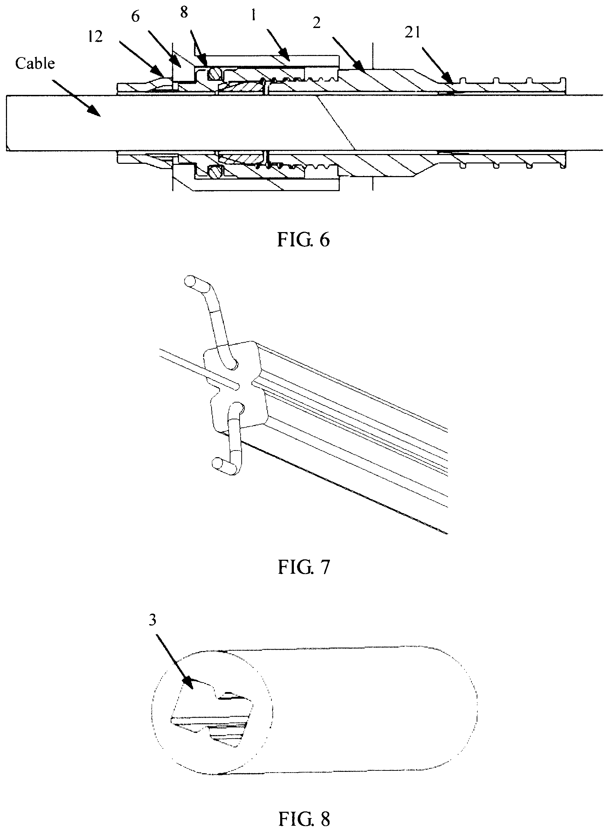

Optionally, in some embodiments of the present invention, in consideration that a cross section of the cable may have different shapes, a matched structure of the first sealing member 3 may be correspondingly designed according to a shape of the cross section of the cable, provided that a shape of an inner wall of the first sealing member 3 matches the shape of the cross section of the cable. For example, a cross section of a flat drop cable shown in FIG 7 is an "8" shape, and there is a small grove on either side of the flat drop cable. Therefore, the first sealing member 3 in the foregoing embodiment cannot be used to seal the cable in the detachable connection apparatus. Then, an internal structure of the first sealing member 3 may be correspondingly set to an "8"-shaped structure shown in FIG. 8. A shape of an outer wall of the first sealing member 3 is unchanged, and still matches a shape of the inner wall of the housing 1. After the structure shown in FIG. 8 is used, the cable may be sealed and fastened by using compression from the wedge conical curved surface 11. An inner hole of the first sealing member shown in FIG 8 is an "8"-shaped through hole that matches the shape and a size of the cross section of the flat drop cable. In this way, the flat drop cable can be sealed in the detachable connection apparatus.

For example, the first sealing member 3 may be an O-shaped sealing ring 3 whose cross section is a 0 shape in FIG 3. The O-shaped sealing ring 3 may be sleeved on the first bolt 2. In a process of tightening the first bolt 2, both the O-shaped sealing ring and the first bolt 2 move along the wedge conical curved surface 11, and move from the second end 112 of the wedge conical curved surface 11 to the first end 111 of the wedge conical curved surface 11, and the aperture of the first end 111 is less than the aperture of the second end 112. Therefore, when both the first bolt 2 and the O-shaped sealing ring 3 move along the wedge conical curved surface 11, the O-shaped sealing ring 3 is squeezed by the wedge conical curved surface 11 and is shrunk to come into close contact with the wedge conical curved surface 11, and a thread may be generated on the O-shaped sealing ring 3 by using squeezing, so that the first bolt 2 is locked with the first thread 12 more tightly, and a sealing effect can be achieved after the locking.

Optionally, in some embodiments of the present invention, for an installation scenario of a plurality of cables, the first sealing member 3 may be set as a porous structure, and each hole can accommodate a cable for passing. A quantity of holes disposed on the first sealing member 3 is not limited in this application, provided that the hole can match a diameter of a to-be-installed cable. Apertures of holes on the first sealing member 3 may be the same or different, to adapt to cables of different diameters. This may be specifically set according to an actual requirement, and is not limited in this application.

In some implementations, the first sealing member 3 in this application may alternatively be of a detachable structure. For example, the cable may be placed after the first sealing member is opened, and the cable does not need to pass through the first sealing member 3. Therefore, it can be learned that this detachable structure is applicable to sealing and fastening of a straight-through cable. In this way, installation efficiency can be effectively improved. The first sealing member 3 in this application may be of a one-hole structure or a porous structure. The one-hole structure is mainly used as an example in this application. The first sealing member supports a detachable opening/closing function. An inner wall formed when the first sealing member 3 is closed matches the shape of the axial cross section of the cable.

It may be learned from this optical embodiment that use of the detachable connection apparatus in this application can resolve a problem, in an existing mechanical sealing and gel sealing manner, that when a drop cable or power cable is introduced, single-cable management cannot be implemented because there are one hole and a plurality of cables. Use of the detachable connection apparatus in this application can facilitate capacity expansion of the communications terminal box or a cable-joint protection box, and also can facilitate maintenance and management of each optical cable or power cable.

A detachable function of the first sealing member 3 in this application may be that a movable connection component is installed on one side of the first sealing member 3 to open and close the first sealing member 3, or may be that an opening is directly disposed at a position of a hole on the first sealing member to place a cable.

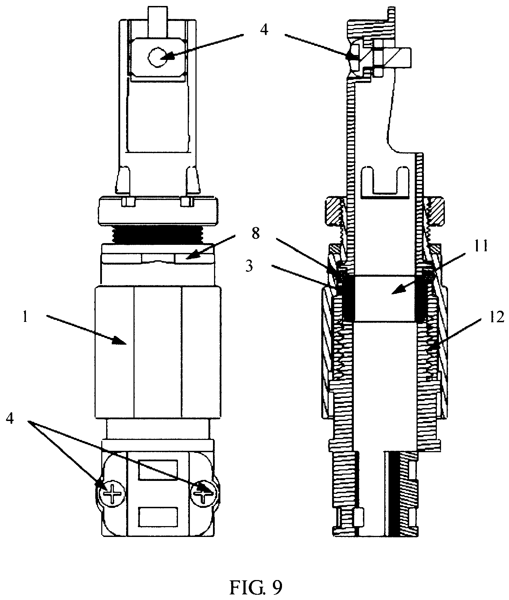

Optionally, in some embodiments of the present invention, to strengthen sealing and fastening of the detachable connection apparatus and the communications terminal box, a second sealing member 8 may be further disposed. Specifically, the detachable connection apparatus further includes the second sealing member 8 that matches an outer wall of the housing 1. The second sealing member 8 is configured to be mutually plug-connected to the detachable connection apparatus when the detachable connection apparatus in which the cable is installed is connected to the communications terminal box, so that the second sealing member 8 is connected to an inner wall of the communications terminal box in a sealed manner by using an interference fit. Optionally, the second sealing member may be further configured to fasten the detachable connection apparatus and the cable, for example, a schematic structural diagram in which the cable and the detachable connection apparatus are sealed and fastened shown in FIG. 9.

The interference fit is a fit that has interference (including that minimum interference is equal to zero). For example, a matched shaft diameter should be greater than an aperture, and then a shaft is squeezed into a hole by using a tool. Alternatively, a characteristic of thermal expansion and contraction is used, that is, a hole is heated and is rapidly sleeved on a shaft when an aperture is enlarged, and the two parts are tightly assembled after cooling and contraction. Therefore, it can be learned that sealing and fastening of the detachable connection apparatus and the communications terminal box can be strengthened by using the second sealing member.

In some implementations, to further prevent the cable from being loose, a component such as an elastic buckle or a snap hook may be further disposed on the housing 1 of the detachable connection apparatus to achieve a locking effect. In addition, detaching may be implemented by applying external pressure on the housing 1, and therefore the detachable connection apparatus and the communications terminal box can be separated easily. Therefore, it can be learned that installation and detaching operations can be easily completed by using the elastic buckle 15 without using an installation tool in this application. Specifically, in this application, the elastic buckle 15 may be disposed at a position that is on an outer wall of the second end 14 of the housing 1 and that is close to the second sealing member 8. The elastic buckle 15 is configured to be inversely buckled on the inner wall of the communications terminal box when the detachable connection apparatus in which the cable is installed is connected to the communications terminal box, so that the second sealing member 8 is connected to the inner wall of the communications terminal box in a sealed manner.

Optionally, in some embodiments of the present invention, to further prevent movement of the cable relative to the first end of the housing 1, a fastening structure 21 may be further disposed on one end of the first bolt 2. The fastening structure 21 may be a structure that is sleeved on the first bolt 2. This is not specifically limited in this application. When the cable penetrates through the first bolt 2, the fastening structure 21 may abut against the cable, so that the fastening structure 21 suppresses relative movement between the cable and the detachable connection apparatus. With the fastening structure, on one hand, an increased friction factor makes it easier for a user to tighten the cable and the detachable connection apparatus, and on the other hand, the cable may be further prevented from being loose.

Optionally, a cable routing position may be reserved in the fastening structure, or a metal clamping bar is used, and then the first screw 4 is used for locking, so as to clamp the cable. Therefore, relative movement between the cable and the detachable connection apparatus is avoided, and the cable is fastened. In addition, a symmetric clipping plane may be further disposed on the fastening structure 21. There is a shallow groove along an axial direction in the clipping plane, so as not only to achieve an effect of abutting against the cable, but also to improve operation experience.

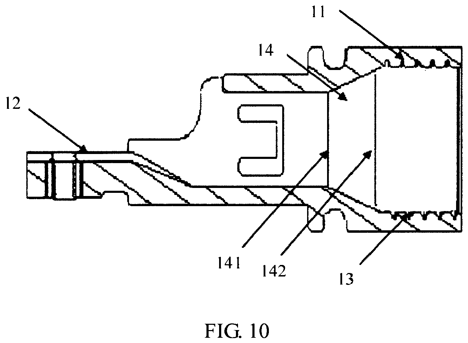

It should be noted that quantities and shapes of first sealing members, second sealing members, and clamping members are not limited in this application, and the quantities may be specifically selected according to factors such as a fastening requirement, and a quantity of deployed cables. In addition, all features of a same component in the embodiment corresponding to any one of FIG. 1 to FIG. 9 are applicable to an embodiment corresponding to FIG. 10, and similarities are not described.

This application further provides a communications terminal box. The communications terminal box includes the detachable connection apparatus shown in any one of FIG. 1 to FIG. 9. When the detachable connection apparatus is inserted into the communications terminal box, a complete communications terminal box is formed. For a specific structure, refer to a structure shown in FIG. 5.

This application further provides a housing 1. As shown in FIG 10, the housing 1 includes a first end 11 and a second end 12. The housing 1 extends from the first end 11 to the second end 12 along an axial direction. A first thread 13 is provided on an inner wall of a port of the first end 11. A clamping member 14 is disposed at a position that is on an inner wall of the first end and that is close to the first thread 13 along an axial direction.

Optionally, the clamping member 14 is disposed on the inner wall of the first end 11, and extends to the second end 12. The clamping member 14 may be detachably connected to the housing 1. In this way, detachment is easy to perform, and an appropriate clamping member may be selected according to a shape of an axial cross section of a cable. A plurality of clamping members 14 may be provided in this application, and are used together with the housing 1.

Optionally, the clamping member 14 includes a curved surface. The curved surface intersects with the inner wall of the first end 11. Curvature of the curved surface progressively increases with an extension direction of the curved surface. The extension direction of the curved surface is a direction from the first end 11 to the second end 12 along the axial direction. It is set that the curvature of the curved surface progressively increases with the extension direction of the curved surface, so as to provide a guide for a component that is inserted into the housing 1, and to mechanically squeeze the component that is inserted into the housing 1. For example, when the cable is inserted into the housing, a sealing member needs to be used to fasten and seal the cable. Then, guided by the curved surface, in a process of entering the curved surface, the sealing member can be mechanically squeezed, so that the sealing member implements a better sealing function.

Optionally, the curved surface is a wedge conical curved surface or a sectoral curved surface. For example, when the cable inserted into the housing 1 is sealed, the wedge conical curved surface or the sectoral curved surface can better adapt to insertion of the cable, can provide a relatively good guide in mechanically squeezing the sealing member onto the curved surface, and certainly can bring better sealing performance.

The wedge conical curved surface may include a first end 141 and a second end 142. An aperture of the first end 141 is not equal to an aperture of the second end 142. The first end 141 faces the second end 12 of the housing 1, and the second end 142 faces the first end 11 of the housing 1. In addition, the first end 141 can accommodate at least a to-be-sealed product for passing. A size of the aperture of the first end 141 may be flexibly set.

In some embodiments of the present invention, a hole position or a structure of another shape may be reserved on an outer wall or an inner wall of the second end 12 of the housing 1, and used to expand a structure of the housing 1. A specific implementation is not limited in this application.

The detachable connection apparatus in this application may be an apparatus independent of the communications terminal box, or may be a component of the communications terminal box. In addition, the detachable connection apparatus can be directly communicatively connected to the communications terminal box, or may be communicatively connected to the communications terminal box by using another adapter component. This is not specifically limited in this application.

In the foregoing embodiments, the description of each embodiment has respective focuses. For a part that is not described in detail in an embodiment, reference may be made to related descriptions in other embodiments.

It may be clearly understood by persons skilled in the art that, for the purpose of convenient and brief description, for a detailed working process of the foregoing system, apparatus, and module, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the embodiments.

In addition, functional modules in this application may be integrated into one processing module, or each of the modules may exist alone physically, or two or more modules are integrated into one module. The integrated module may be implemented in a form of hardware, or may be implemented in a form of a software functional module. When the integrated module is implemented in the form of a software functional module and sold or used as an independent product, the integrated unit may be stored in a computer-readable storage medium.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a Solid State Disk (SSD)), or the like.

The technical solutions provided in this application are described in detail above. The principle and implementation of this application are described herein through specific examples. The description about the embodiments is merely provided to help understand the method and core ideas of this application. In addition, persons of ordinary skill in the art can make variations and modifications to this application in terms of the specific implementations and application scopes according to the ideas of this application. Therefore, the content of specification shall not be construed as a limit to this application.

## Claims

1. A detachable connection apparatus for sealing a cable, wherein the detachable connection apparatus comprises a housing, a first bolt, a clamping member, and a first sealing member;
the housing comprises a first end and a second end, the housing extends from the first end to the second end along an axial direction, a first thread is provided on an inner wall of a port of the first end, and the first thread is configured to thread with the first bolt;
the clamping member is disposed at a position that is on an inner wall of the first end and that is close to the first thread along an axial direction;
the first bolt is of a hollow structure; and
the first bolt that is sleeved on the cable is configured to: when the cable is inserted into the housing, enter the housing from the first end, and move along an axial direction of the housing, so that guided by an inner peripheral wall of the clamping member, the first sealing member moves towards the second end, and a part that is of the first sealing member and that stretches into the clamping member is deformed, the first bolt is locked with the first thread, and so that the cable is sealed and fastened on an inner wall of the housing.

2. The detachable connection apparatus according to claim 1, wherein the clamping member is disposed on the inner wall of the first end, and extends to the second end, and the housing is detachably connected to the clamping member; or, a cavity that is inwardly protruded may be directly provided on the inner wall of the housing, to form the clamping member.

3. The detachable connection apparatus according to claim 1 or 2, wherein the clamping member comprises a curved surface, curvature of the curved surface progressively increases with an extension direction of the curved surface, and the extension direction of the curved surface is a direction from the first end to the second end along the axial direction.

4. The detachable connection apparatus according to claim 3, wherein the curved surface is a wedge conical curved surface or a sectoral curved surface.

5. The detachable connection apparatus according to any one of claims 1 to 4, wherein the cable comprises a strength member structure, and the detachable connection apparatus further comprises a first screw and a first nut; and
the first nut thread with the first screw, wherein the strength member structure is located between the first nut and the first screw, so that the strength member structure is fastened.

6. The detachable connection apparatus according to any one of claims 1 to 5, wherein a shape of an inner wall of the first sealing member matches a shape of a cross section of the cable.

7. The detachable connection apparatus according to any one of claims 1 to 6, wherein the detachable connection apparatus further comprises a second sealing member that matches an outer wall of the housing, and the second sealing member is configured to be mutually plug-connected to the detachable connection apparatus when the detachable connection apparatus in which the cable is installed is connected to a communications terminal box, so that the second sealing member is connected to an inner wall of the communications terminal box in a sealed manner by using an interference fit.

8. The detachable connection apparatus according to claim 7, wherein an elastic buckle is disposed at a position that is on an outer wall of the second end of the housing and that is close to the second sealing member, and the elastic buckle is configured to be inversely buckled on the inner wall of the communications terminal box when the detachable connection apparatus in which the cable is installed is connected to the communications terminal box, so that the second sealing member is connected to the inner wall of the communications terminal box in a sealed manner.

9. The detachable connection apparatus according to any one of claims 1 to 8, wherein a fastening structure is disposed on one end of the first bolt, and when the cable penetrates through the first bolt, the fastening structure abuts against the cable, so that the fastening structure suppresses relative movement between the cable and the detachable connection apparatus.

10. A communications terminal box, wherein the communications terminal box comprises a cable leading-in hole and the detachable connection apparatus according to any one of claims 1 to 9.

11. A housing, wherein the housing comprises a first end and a second end, the housing extends from the first end to the second end along an axial direction, a first thread is provided on an inner wall of a port of the first end, and a clamping member is disposed at a position that is on an inner wall of the first end and that is close to the first thread along an axial direction.

12. The housing according to claim 11, wherein the clamping member is disposed on the inner wall of the first end, and extends to the second end; or, a cavity that is inwardly protruded may be directly provided on the inner wall of the housing, to form the clamping member.

13. The housing according to claim 12, wherein the clamping member comprises a curved surface, curvature of the curved surface progressively increases with an extension direction of the curved surface, and the extension direction of the curved surface is a direction from the first end to the second end along the axial direction.

14. The housing according to claim 13, wherein the curved surface is a wedge conical curved surface or a sectoral curved surface.
